# EUROPÄISCHE PATENTSCHRIFT

(11) **EP 1 250 560 B1**
(45) Veröffentlichungstag und Bekanntmachung des Hinweises auf die Patenterteilung: **30.07.2003**
(21) Anmeldenummer: 00990590.2
(22) Anmeldetag: 23.12.2000
(51) Int. Cl.: F41H 5/04

(54) **VERBUNDGLASSCHEIBE FÜR SICHERHEITSKRAFTFAHRZEUGE**
MULTILAYER GLASS PANE FOR SAFE MOTOR VEHICLES
VITRE EN VERRE FEUILLETE POUR VEHICULES AUTOMOBILES DE SECURITE

(30) Priorität: 24.01.2000 DE 10002671
(43) Veröffentlichungstag der Anmeldung: 23.10.2002
(73) Patentinhaber: Sachsenring Entwicklungsgesellschaft mbH, 08058 Zwickau (DE)
(72) Erfinder: ROSE, Michael, 08373 Wernsdorf (DE)
(74) Vertreter: Rumrich, Gabriele, Dipl.-Ing.
(86) Internationale Anmeldenummer: DE0004676
(87) Internationale Veröffentlichungsnummer: WO01053769

(56) Entgegenhaltungen:
- DE-A- 4 142 416
- DE-A- 4 415 879
- DE-C- 19 729 897
- DE-U- 29 818 858

## Beschreibung

Die Erfindung betrifft eine Verbundglasscheibe für Sicherheitskraftfahrzeuge, nach dem Oberbegriff des ersten Patentanspruchs, die aus mehreren Einzelscheiben zusammengesetzt ist, wobei zumindest die Außenscheibe die anderen Scheiben stufenförmig ihrer Außenkante zumindest bereichsweise überragt und an wenigstens einem Rand der Scheibe ein erstes Sicherungselement befestigt ist.

Es sind zahlreiche Lösungen zum Aufbau von Sicherheitsscheiben für Kraftfahrzeuge bekannt, wobei meist mehrere Verbundscheiben aus Sicherheitsglas zusammengesetzt werden, zwischen denen Folien oder fluidgefüllte Zwischenräume vorgesehen sind und eine oder mehrere Schichten aus Polycarbonatglas bestehen können (DE 43 36 321 A1, DE 195 48 338 A1, EP 302 959 A1).

In DE 36 39 781 C1 wird eine Panzerglasscheibe in Stufenglasausführung beschrieben, die an ihrer oberen Kante in Richtung zum Fahrzeuginnenraum abgeschrägt ist, wobei die sich dadurch bildende Keilfuge mittels einer im Innenraum angeordneten Panzerplatte überdeckt ist. Die Panzerplatte ist dabei nicht an der Panzerscheibe befestigt. Die Halterung und Führung der Panzerglasscheibe bildet ein Rahmenprofil, welches die Panzerglasscheibe von oben, vorn und hinten begrenzt und als komplexes Bauteil ausgebildet ist. Das Rahmenprofil weist ein Ergänzungsprofil auf, das einen im wesentlichen U-förmigen Querschnitt hat und den Rand der Panzerglasscheibe umfaßt.

Ebenfalls eine Stufenglasausführung wird in DE 196 39 607 A1 beschrieben, wobei zwischen zwei Scheiben ein Abstandhalter und eine Dichtung angeordnet sein können.

In DE 41 42 416 A1 und in DE 44 15 879 C2 wird jeweils eine aus Panzerglas bestehende Fensterscheibe für Kraftfahrzeuge beschrieben, die im Randbereich ein längs des Randes verlaufendes Panzerelement in Form eines Winkels trägt. Der Winkel grenzt dabei gem. DE 41 42 416 A1 mit einem Schenkel an einen in Richtung zur Außenseite des Fahrzeugs weisenden Vorsprung der Scheibe an und der andere Winkel liegt an der Fahrzeuginnenseite. Nach DE 44 15 879 verläuft der Winkel mit seinen Schenkeln in der Randstufe des Fensters. Beide Lösungen weisen einen hohen konstruktiven Aufwand auf, da diese winkelförmigen Profile genau dem gekrümmten Verlauf der Stirnfläche der Panzerscheibe folgen müssen. Weiterhin ist es in beiden Fällen notwendig, das im Innenraum des Fahrzeuges vorgesehene beschußsichere Material über den Randbereich des Sicherheitsglases zu führen, um auch in einem steilen Winkel auftreffende Projektile nicht in den Fahrzeuginnenraum eindringen zu lassen.

Bei Sicherheitskraftfahrzeugen besteht weiterhin ein grundlegendes Problem darin, daß insbesondere der Randbereich der Außenscheibe bis zum Randbereich des sich anschließenden Sicherheitsscheibenpaketes und bis zu den beschußsicheren Auskleidungen im Innenraum des Fahrzeuges ungeschützt ist.

Dazu wird in DE 198 03 435 C1 eine Lösung beschrieben, bei welcher die Verbundscheibe einen Streifen aus beschußsicherem Material aufweist, der den Bereich bis zu den beschußsicheren Auskleidungen überlappt. Problematisch ist dabei die Herstellung einer festen Verbindung zwischen dem Strukturglas und dem Streifen aus beschußsicherem Material.

Der Erfindung liegt die Aufgabe zugrunde, eine Verbundglasscheibe für Sicherheitskraftfahrzeuge zu entwickeln, die kostengünstig und einfach herstellbar ist und geringen Füge- und Montageaufwand erfordert.

Diese Aufgabe wird mit den Merkmalen des ersten Patentanspruchs gelöst. Vorteilhafte Weiterbildungen ergeben sich aus den Unteransprüchen. Die Verbundglasscheibe ist bekannter Weise aus mehreren Einzelscheiben zusammengesetzt, wobei zumindest die Außenscheibe die anderen Scheiben stufenförmig an ihrer Außenkante zumindest bereichsweise überragt und an wenigstens einem Rand der Scheibe ein erster Schenkel eines Sicherungselementes befestigt ist. Erfindungsgemäß weist das Sicherungselement wenigstens zwei weitere Schenkel auf, die im wesentlichen rechtwinklig zum ersten Schenkel angeordnet sind. Der zweite Schenkel überlappt dabei den Bereich bis zu dem an die Verbundscheibe angrenzenden Karosserieteil oder der beschußsicheren Innenverkleidung des Fahrzeuges und der dritte Schenkel überlappt die Verbundscheibe. Der dritte Schenkel kann dabei entweder zwischen zwei Scheiben oder an der Innenseite der Innenscheibe angebracht sein. Zumindest der erste und der zweite Schenkel sind als separate Bauteile ausgebildet.

Die Verbindung zwischen dem ersten und dem zweiten Schenkel erfolgt vorzugsweise formschlüssig durch eine ggf. lösbare Steckverbindung. Der zweite und/oder der dritte Schenkel weisen Aussparungen auf, in die Vorsprünge des ersten Schenkels eingreifen oder umgekehrt.

Die Schenkel werden dabei durch geeignete Sicherungselemente zueinander lagefixiert.

Das Sicherungselement kann auch bevorzugt einen vierten Schenkel aufweisen, der den zweiten und den dritten Schenkel in Richtung zum Fahrzeuginnenraum überragt. Der zweite und der dritte Schenkel sind als ein erstes streifenförmiges Element sowie der erste und der vierte Schenkel als ein zweites streifenförmiges Element ausgebildet. In diesem Fall erfolgt die Lagefixierung des zweiten und dritten Schenkels z.B. durch Sicherungsstifte im vierten Schenkel des zweiten streifenförmigen Bauteiles, die in entsprechende Ausnehmungen in diesem eingreifen und das in Richtung zur Innenscheibe davor angeordnete zweite streifenförmige Element in seiner Position halten. Die Stifte können als Zylinder- oder Keilstifte ausgebildet sein und werden bevorzugt ebenfalls durch Sicherungselemente z.B. durch Stifte lagepositioniert.

Die Schenkel können aus gleichen oder unterschiedlichen Materialien bestehen. Bevorzugt ist mindestens der zweite Schenkel, der den Bereich bis zu den beschußsicheren Karosserieteilen oder -auskleidungen überlappt, aus hochfestem beschußsicheren Stahlblech, beschußsicherer Keramik oder einem anderen beschußhemmenden Material ausgebildet. Auch der dritte Schenkel wird vorzugsweise aus einem entsprechenden beschußsicheren Werkstoff gefertigt. An dem ersten Schenkel und, wenn vorhanden, an dem vierten Schenkel, werden geringere Anforderungen an die Beschußsicherheit gestellt, diese können daher aus einem Stahlblech mit einer vergleichsweise geringeren Festigkeit oder auch aus Kunststoff oder Faserverbundmaterial bestehen.

Die Befestigung des ersten Schenkels am Rand der Scheibe wird bevorzugt durch eine Klebeverbindung hergestellt. Anschließend kann der zweite Schenkel durch einfaches Einstecken formschlüssig mit dem ersten Element verbunden und anschließend durch Sicherungselemente lagefixiert werden.

Alternativ besteht die Möglichkeit, auch den dritten Schenkel an die Innenscheibe oder zwischen zwei Scheiben zu kleben. Die Lagepositionierung mittels Stiften kann dann entfallen.

Durch die Verwendung von separat ausgebildeten Schenkeln des Sicherungselementes ist es möglich, diese dem Verlauf der Scheibenkontur besser anzupassen. Der Füge- und Montageprozeß wird im Vergleich zu herkömmlichen Lösungen ebenfalls wesentlich vereinfacht. Der dritte Schenkel sichert dabei den Randbereich der sich anschließenden Glasscheiben und der zweite Schenkel den Bereich bis zur Karosserie mit den dort befindlichen beschußsicheren Auskleidungen. Damit wird die Beschußsicherheit, insbesondere bei Randbeschuß, wesentlich erhöht, da die gefährdeten Randbereiche der beschußsicheren Auskleidungen der Karosserie des Sicherheitskraftfahrzeuges zusätzlich gesichert werden. Damit wird nicht nur einem Beschuß senkrecht zur Scheibe, sondern auch in Scheibenlängsrichtung, standgehalten.

Die Erfindung wird nachfolgend anhand von Ausführungsbeispielen und zugehörigen Zeichnungen näher erläutert.

Es zeigen:
- Fig. 1:: Verbundglasscheibe mit einem Sicherungselement, mit vier Schenkeln, wobei die Schenkel 4.1 und 4.4 sowie die Schenkel 4.2 und 4.3 als jeweils ein streifenförmiges Bauteil 4a, 4b ausgebildet sind, Schenkel 4.3 an der Innenscheibe;
- Fig. 2:: Verbundglasscheibe gem. Fig. 1 mit einem Schenkel 4.3 zwischen zwei Scheiben;
- Fig. 3:: Verbundglasscheibe gem. Fig. 1 mit einem Schenkel 4.3 der an der Stirnseite der Innenscheibe 1i und an der sich anschließenden Scheibe anliegt,
- Fig. 4:: Verbundglasscheibe gem. Fig. 1 mit separaten Schenkeln 4.2, 4.3;
- Fig. 5:: dreidimensionale schematische Darstellung des an der Glasscheibe befestigten ersten streifenförmiges Bauteil 4a (gebildet aus Schenkel 4.1 und 4.4) vor Montage des zweiten streifenförmigen Bauteils 4b (gebildet aus Schenkel 4.2 und 4.3);
- Fig. 6:: Darstellung gem. Fig. 4 nach erfolgter Montage
- Fig. 7:: beide streifenförmige Bauteile 4a, 4b in dreidimensionaler Ansicht, wobei das erste streifenförmige Bauteil 4a in Längsausdehnung zusätzliche Aussparungen N aufweist.

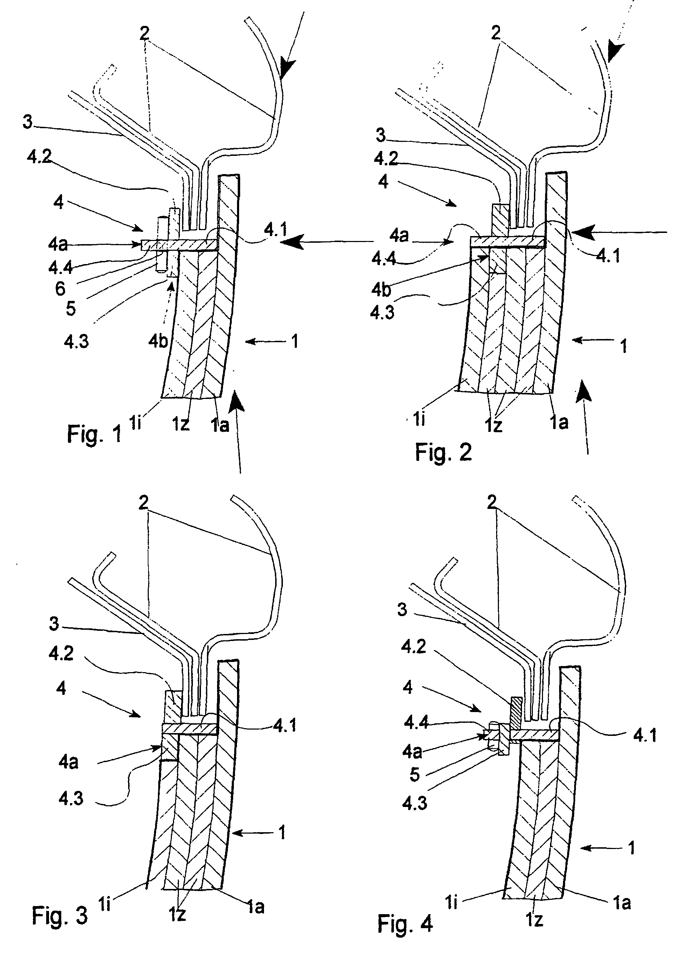

Die Verbundglasscheiben 1 ist gem. Fig. 1 bis 6 aus mehreren Einzelscheiben zusammengesetzt. Zwischen der Außenscheibe 1a und der Innenscheibe 1i sind eine oder mehrere Zwischenscheiben 1z angeordnet. Die Außenscheibe 1a überragt die anderen Scheiben und überlappt die sich anschließenden Karosserieteile 2 und somit die in Richtung zum Fahrzeuginnenraum an der Karosserie 2 angeordnete Innenverkleidung 3 aus beschußsicherem Material. An dem im Vergleich zur Außenscheibe 1a zurückgesetzten anderer Scheiben 1z und 1i ist ein Sicherungselement 4 mit seinem ersten Schenkel 4.1 befestigt, vorzugsweise verklebt. Das Sicherungselement 4 ist in der Darstellung gem. Fig. 1 und 2 im Querschnitt kreuzförmig ausgebildet. Rechtwinklig zum ersten Schenkel 4.1 sind ein zweiter Schenkel 4.2 und ein dritter Schenkel 4.3 angeordnet, wobei der zweite Schenkel 4.2 den Bereich bis zu dem sich an die Verbundscheibe 1 angrenzende Karosserieteil 2 und die beschußsicheren Innenverkleidung 3 und der dritte Schenkel 4.3 die Verbundglasscheibe 1 überlappt.

Der dritte Schenkel 4.3 ist gem. Fig. 1 an der in Richtung zum Fahrgastraum weisenden Seite der Innenscheibe 1i der Verbundglasscheibe 1 angeordnet und gem. Fig. 2 zwischen der Innenscheibe 1i und einer Zwischenscheibe 1z. Unter dem dritten Schenkel 4.3 kann dabei wie in Fig. 2 dargestellt eine entsprechend zurückgesetzte Zwischenscheibe 1z sein oder sich ein Luftpolster befinden. Die beiden Schenkel 4.1 und 4.4 sind als ein gemeinsames streifenförmiges erstes Bauteil 4a und die Schenkel 4.2 und 4.3 als ein gemeinsames streifenförmiges zweites Bauteil 4b ausgebildet.

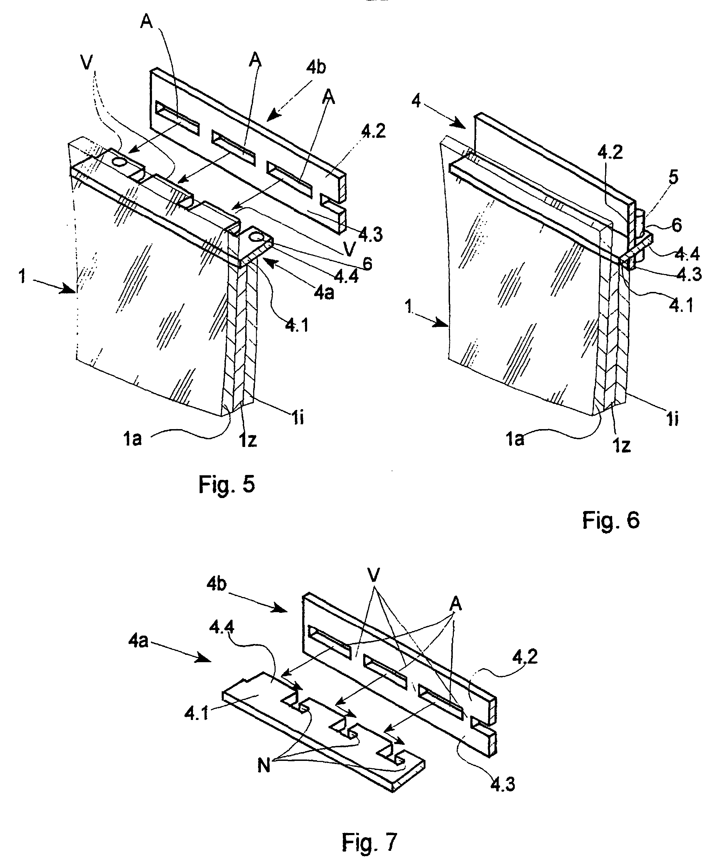

Die Sicherung des zweiten streifenförmigen Bauteils 4b erfolgt gem. Fig. 1 bei einer formschlüssigen Steckverbindung durch Sicherungsstifte 5, die in entsprechende Ausnehmungen 6 im Schenkel 4.4 des Sicherungselementes 4 eingreifen (s. auch Fig. 5 und 6). Die Sicherungsstifte 5 werden vorteilhafterweise ebenfalls lagefixiert, z.B. ebenfalls durch Sicherungsstifte oder durch Sicherungslack (nicht dargestellt). Gemäß Fig. 2 kann das zweite streifenförmige Bauteil 4b am ersten streifenförmigen Bauteil 4a auch durch eine Klebeverbindung befestigt sein, dies ist z.B. bei der Ausführung gem. Fig. 2 möglich. Der dritte Schenkel 4.3 des Sicherungselementes 4 ist dabei nicht fest mit den angrenzenden Scheiben 1i, 1z verbunden, um Spannungen zu vermeiden.

Eine Variante eines im Querschnitt T-förmigen Sicherungselements 4 zeigt Fig. 3. Am Sicherungselement 4 sind drei Schenkel 4.1, 4.2, 4.3 vorhanden. Die Innenscheibe 1i ist im Vergleich zu der sich anschließenden Zwischenscheibe 1z zurückgesetzt, an ihre Stirnseite schließt sich der dritte Schenkel 4.3 des Sicherungselements 4 an, der ebenfalls an der nächstliegenden Zwischenscheibe 1z abgrenzt. Dem dritten Schenkel 4.3 gegenüberliegend und mit diesem zu einem zweiten Bauteil 4b einteilig verbunden, liegt der zweite Schenkel 4.2 gegenüber und überlappt den Bereich bis zur Karosserie 2 und zur Innenverkleidung 3.

Eine Ausführungsvariante mit einteilig aus erstem und viertem Schenkel 4.1, 4.4 gebildetem ersten streifenförmigen Element ist in Fig. 4 dargestellt. Die Schenkel 4.2 und 4.3 sind nicht einteilig, sondern separat ausgebildet, mit dem ersten streifenförmigen Element 4a durch eine Steckverbindung formschlüssig verbunden und durch Sicherungsstifte 5 lagefixiert.

In Fig. 5 ist dreidimensional schematisch dargestellt, wie das erste streifenförmige Element 4a an der Verbundglasscheibe 1 mit seinem Schenkel 4.1 verklebt ist. Die Ausführung entspricht der in Fig. 1 dargestellten Variante. Der Schenkel 4.4 weist Vorsprünge V auf. Dazu rechtwinklig wird das zweite streifenförmige Bauteil 4b positioniert. Das Bauteil 4b besitzt Aussparungen A in die bei Montage die Vorsprüngen V eingreifen. Im Schenkel 4.4 sind weiterhin Ausnehmungen 6 für Sicherungsstifte 5 vorgesehen. Diese Ausführung nach Beendigung der Montage zeigt Fig. 6. Das erste streifenförmige Bauteil 4a und das zweite streifenförmige Bauteil bilden nun das Sicherungselement 4, wobei das zweite streifenförmige Bauteil durch Sicherungsstifte 5, welche in die Ausnehmungen 6 eingreifen, lagefixiert wird.

Das Sicherungselement 4 wurde somit durch eine einfache Steckverbindung zweier Bauteile 4a und 4b, insbesondere Stahlblechstreifen gebildet, die sich einfach dem Konturverlauf der Scheibe anpassen lassen.

Anstelle der Lagefixierung mittels Sicherungsstiften ist es auch möglich, daß die Schenkel durch geeignete Sicherungselemente zueinander lagefixiert werden derart, daß in Längsrichtung des ersten streifenförmigen Bauteiles 4a in den Vorsprüngen nutförmige Ausnehmungen N vorhanden sind, in welche durch eine Bewegung des zweiten streifenförmigen Bauteiles in Längsrichtung dessen zwischen den Ausnehmungen A verbliebene Stege S eingreifen (s. Fig. 7). Neben den dargestellten Ausführungsbeispielen zur Herstellung einer formschlüssigen Verbindung zwischen den Bauteilen 4a, 4b sind auch zahlreiche andere Varianten zur Bildung einer Steckverbindung möglich. So kann beispielsweise bei einer Ausführung des zweiten streifenförmigen Elements 4a bzw. des ersten Schenkels 4.1 aus Kunststoff oder Faserverbundmaterial ein Einknüpfen von an diesen Bauteilen vorhandenen Vorsprüngen in entsprechende Ausnehmungen des korrespondierenden Bauteiles erfolgen.

## Patentansprüche

1. Verbundglasscheibe für Sicherheitskraftfahrzeuge, die aus mehreren Einzelscheiben zusammengesetzt ist, wobei zumindest die Außenscheibe 1a die anderen Scheiben (1z, 1i) stufenförmig mit ihrer Außenkante zumindest bereichsweise überragt und an wenigstens einem Rand der Scheibe ein erster Schenkel (4.1) eines Sicherungselementes (4) befestigt ist, **dadurch gekennzeichnet, daß** das Sicherungselement (4) wenigstens zwei weitere Schenkel (4.2, 4.3) aufweist, die zum ersten Schenkel (4.1) im wesentlichen rechtwinklig angeordnet sind, wobei der zweite Schenkel (4.2) den Bereich bis zu einem an die Verbundscheibe angrenzenden Karosserieteil (2) oder einer beschußsicheren Innenverkleidung (3) und der dritte Schenkel (4.3) die Verbundglasscheibe (1) überlappt und wobei wenigstens der zweite Schenkel (4.2) und der erste Schenkel (4.1) als separate Bauteile ausgebildet sind.

2. Verbundglasscheibe nach Anspruch 1, **dadurch gekennzeichnet, daß** der dritte Schenkel (4.3) zwischen zwei Scheiben (1z, 1i) oder an der Innenscheibe (1i) der Verbundglasscheibe (1) angeordnet ist.

3. Verbundglasscheibe nach Anspruch 1 oder 2, **dadurch gekennzeichnet, daß** die Schenkel des Sicherungselementes (4) formschlüssig miteinander verbunden sind.

4. Verbundglasscheibe nach einem oder mehreren der Ansprüche 1 bis 3, **dadurch gekennzeichnet, daß** die Schenkel des Sicherungselementes (4) lösbar miteinander verbunden sind.

5. Verbundglasscheibe nach einem oder mehreren der Ansprüche 1 bis 4, **dadurch gekennzeichnet, daß** der zweite und/oder der dritte Schenkel (4.2, 4.3) Aussparungen (A) aufweist, in welche Vorsprünge (V) des ersten Schenkels (4.1) eingreifen oder umgekehrt.

6. Verbundglasscheibe nach einem oder mehreren der Ansprüche 1 bis 5, **dadurch gekennzeichnet, daß** das Sicherungselement (4) einen vierten Schenkel (4.4) aufweist, der dem ersten Schenkel (4.1) gegenüberliegt und den zweiten (4.2) und den dritten Schenkel (4.3) in Richtung zum Fahrgastraum überragt.

7. Verbundglasscheibe nach einem oder mehreren der Ansprüche von 1 bis 6, **dadurch gekennzeichnet, daß** der erste Schenkel (4.1) und der vierte Schenkel (4.4) als ein einteiliges streifenförmiges erstes Bauteil (4a) ausgebildet sind.

8. Verbundglasscheibe nach einem oder mehreren der Ansprüche von 1 bis 7, **dadurch gekennzeichnet, daß** der zweite Schenkel (4.2) und der dritte Schenkel (4.3) als ein einteiliges streifenförmiges zweites Bauteil ausgebildet sind.

9. Verbundglasscheibe nach einem oder mehreren der Ansprüche 1 bis 8, **dadurch gekennzeichnet,** die Schenkel durch geeignete Sicherungselemente zueinander lagefixiert werden.

10. Verbundglasscheibe nach Anspruch 9, **dadurch gekennzeichnet, daß** die Sicherungselemente als Stifte (5) ausgebildet sind.

11. Verbundglasscheibe nach einem oder mehreren der Ansprüche 1 bis 10, **dadurch gekennzeichnet, daß** zumindest der zweite Schenkel (4.2) aus Stahlblech, beschußsicherer Keramik oder einem anderen beschußhemmenden Material besteht.

12. Verbundglasscheibe nach einem oder mehreren der Ansprüche 1 bis 11, **dadurch gekennzeichnet, daß** der erste Schenkel (4.1) und/oder der dritte Schenkel (4.3) und/oder der vierte Schenkel (4.4) aus einem Werkstoff besteht, der im Vergleich zum Werkstoff des zweiten Schenkels (4.2) eine geringere Beschußsicherheit aufweist.

13. Verbundglasscheibe nach einem oder mehreren der Ansprüche 1 bis 12, **dadurch gekennzeichnet, daß** der erste Schenkel (4.1) und/oder der dritte Schenkel (4.3) und/oder der vierte Schenkel (4.4) aus Stahlblech oder Kunststoff besteht.

14. Verbundglasscheibe nach einem oder mehreren der Ansprüche 1 bis 13, **dadurch gekennzeichnet, daß** der erste Schenkel (4.1) am Rand der Scheibe (1) durch eine Klebeverbindung befestigt ist.

## Claims

1. A multi-layer glass pane for security vehicles, which pane is composed of several individual panes, with at least the outside pane 1a projecting with its outer edge in steps at least in sections and with a first leg (4.1) of a securing element (4) being fastened to at least one edge of the pane, **characterized in that** the securing element comprises at least two further legs (4.2, 4.3) which are arranged substantially at a right angle to the first leg (4.1), with said second leg (4.2) overlapping the region up to a body part (2) adjacent to the multi-layer glass pane or a bullet-proof inside lining (3) and with the third leg (4.3) overlapping the multi-layer glass pane (1) and with at least the second leg (4.2) and the first leg (4.1) being arranged as separate components.

2. A multi-layer glass pane as claimed in claim 1, **characterized in that** the third leg (4.3) is arranged between two panes (1z, 1i) or on the inside pane (1i) of the multi-layer glass pane (1).

3. A multi-layer glass pane as claimed in claim 1 or 2, **characterized in that** the legs of the securing element (4) are joined together in a positive-locking fashion.

4. A multi-layer glass pane as claimed in one or several of the claims 1 to 3, **characterized in that** the legs of the securing element (4) are joined in a detachable fashion.

5. A multi-layer glass pane as claimed in one or several of the claims 1 to 4, **characterized in that** the second and/or third leg (4.2, 4.3) comprises recesses (A) into which engage projections (V) of the first leg (4.1) or vice-versa.

6. A multi-layer glass pane as claimed in one or several of the claims 1 to 5, **characterized in that** the securing element (4) comprises a fourth leg (4.4) which is opposite of the first leg (4.1) and projects beyond the second (4.2) and third leg (4.3) in the direction towards the passenger compartment.

7. A multi-layer glass pane as claimed in one or several of the claims 1 to 6, **characterized in that** the first leg (4.1) and the fourth leg (4.4) are arranged as an integral, strip-like first component (4a).

8. A multi-layer glass pane as claimed in one or several of the claims 1 to 7, **characterized in that** the second leg (4.2) and the third leg (4.3) are arranged as an integral, strip-like second component.

9. A multi-layer glass pane as claimed in one or several of the claims 1 to 8, **characterized in that** the legs are positionally secured with respect to each other by suitable securing elements.

10. A multi-layer glass pane as claimed in claim 9, **characterized in that** the securing elements are arranged as pins (5).

11. A multi-layer glass pane as claimed in one or several of the claims 1 to 10, **characterized in that** at least the second leg (4.2) is made of steel plate, bullet-proof ceramics or any other material resistant to bombardment.

12. A multi-layer glass pane as claimed in one or several of the claims 1 to 11, **characterized in that** the first leg (4.1) and/or the third leg (4.3) and/or the fourth leg (4.4) consist of a material which in comparison with the material of the second leg (4.2) comprises a lower security against bombardment.

13. A multi-layer glass pane as claimed in one or several of the claims 1 to 12, **characterized in that** the first leg (4.1) and/or the third leg (4.3) and/or the fourth leg (4.4) consist of steel plate or synthetic material.

14. A multi-layer glass pane as claimed in one or several of the claims 1 to 13, **characterized in that** the first leg (4.1) is fastened at the edge of the pane (1) by a glued connection.

## Revendications

1. Vitre en verre feuilleté pour véhicules de sécurité, composée de plusieurs vitres distinctes, la vitre extérieure 1a au moins faisant saillie en gradins au moins par endroits sur les autres vitres (1z, 1i) sur son bord extérieur et un premier bras (4.1) d'un élément de fixation (4) étant fixé sur au moins un bord de la vitre, **caractérisée en ce que** l'élément de fixation (4) comprend au moins deux autres bras (4.2, 4.3) sensiblement perpendiculaires au premier bras (4.1), le deuxième bras (4.2) recouvrant la zone allant jusqu'à une partie de carrosserie (2) contiguë à la vitre feuilletée ou à un revêtement intérieur (3) résistant aux projectiles et le troisième bras (4.3) recouvrant la vitre feuilletée (1), et le deuxième bras (4.2) et le premier bras (4.1) au moins étant conçus comme des éléments séparés.

2. Vitre en verre feuilleté selon la revendication 1, **caractérisée en ce que** le troisième bras (4.3) est disposé entre deux vitres (1z, 1i) ou sur la vitre intérieure (1i) de la vitre en verre feuilleté (1).

3. Vitre en verre feuilleté selon la revendication 1 ou 2, **caractérisée en ce que** les bras de l'élément de fixation (4) sont reliés entre eux par engagement positif.

4. Vitre en verre feuilleté selon une ou plusieurs des revendications 1 à 3, **caractérisée en ce que** les bras de l'élément de fixation (4) sont reliés entre eux de façon amovible.

5. Vitre en verre feuilleté selon une ou plusieurs des revendications 1 à 4, **caractérisée en ce que** le deuxième et (ou) le troisième bras (4.2, 4.3) présentent des évidements (A) dans lesquels se mettent en prise des saillies (V) du premier bras (4.1), ou vice versa.

6. Vitre en verre feuilleté selon une ou plusieurs des revendications 1 à 5, **caractérisée en ce que** l'élément de fixation (4) présente un quatrième bras (4.4) qui fait face au premier bras (4.1) et dépasse les deuxième (4.2) et troisième bras (4.3) en direction de l'habitacle.

7. Vitre en verre feuilleté selon une ou plusieurs des revendications 1 à 6, **caractérisée en ce que** le premier bras (4.1) et le quatrième bras (4.4) sont formés comme une première pièce (4a) en forme de bande d'un seul tenant.

8. Vitre en verre feuilleté selon une ou plusieurs des revendications 1 à 7, **caractérisée en ce que** le deuxième bras (4.2) et le troisième bras (4.3) sont formés comme une deuxième pièce en forme de bande d'un seul tenant.

9. Vitre en verre feuilleté selon une ou plusieurs des revendications 1 à 8, **caractérisée en ce que** les bras sont fixés dans leur position les uns par rapport aux autres par des éléments de fixation adéquats.

10. Vitre en verre feuilleté selon la revendication 9, **caractérisée en ce que** les éléments de fixation sont conformés comme des goujons (5).

11. Vitre en verre feuilleté selon une ou plusieurs des revendications 1 à 10, **caractérisée en ce que** le deuxième bras (4.2) au moins est composé de tôle d'acier, de céramique résistante aux projectiles ou d'un autre matériau arrêtant les projectiles.

12. Vitre en verre feuilleté selon une ou plusieurs des revendications 1 à 11, **caractérisée en ce que** le premier bras (4.1) et (ou) le troisième bras (4.3) et (ou) le quatrième bras (4.4) se composent d'un matériau moins résistant aux projectiles que celui du deuxième bras (4.2).

13. Vitre en verre feuilleté selon une ou plusieurs des revendications 1 à 12, **caractérisée en ce que** le premier bras (4.1) et (ou) le troisième bras (4.3) et (ou) le quatrième bras (4.4) sont faits de tôle d'acier ou de plastique.

14. Vitre en verre feuilleté selon une ou plusieurs des revendications 1 à 13, **caractérisée en ce que** le premier bras (4.1) est fixé sur le bord de la vitre (1) par collage.
